# FASCICULE DE BREVET EUROPEEN

(11) **EP 4 374 149 B1**
(45) Date de publication et mention de la délivrance du brevet: **24.06.2026**
(21) Numéro de dépôt: 22741806.8
(22) Date de dépôt: 20.07.2022
(51) Int. Cl.: G01L 19/06, G01L 13/02, G01L 9/00

(54) **DETECTEUR DE PRESSION DE FLUIDE**
FLÜSSIGKEITSDRUCKDETEKTOR
FLUID PRESSURE DETECTOR

(30) Priorité: 21.07.2021 FR 2107866
(43) Date de publication de la demande: 29.05.2024
(73) Titulaire: Safran Aerosystems, 78370 Plaisir (FR)
(72) Inventeur: PRIVAT, Joël, 77550 MOISSY-CRAMAYEL (FR); LEMOINE, Alban, 77550 MOISSY-CRAMAYEL (FR)
(74) Mandataire: Cabinet Boettcher
(86) Numéro de dépôt international: PCT/EP2022/070416
(87) Numéro de publication internationale: WO 2023/001922

(56) Documents cités:
- EP-A1- 1 319 936
- WO-A1-2005/059343
- WO-A1-2009/135612

## Description

La présente invention concerne un détecteur de pression destiné à être associé à un circuit hydraulique ou pneumatique pour délivrer un signal électrique en réponse au franchissement d'un seuil de pression dans le circuit.

### ARRIERE PLAN DE L'INVENTION

Généralement, les détecteurs de pression sont adaptés pour réagir à une différence de pression entre la pression d'un circuit et une pression de référence, qui peut être la pression atmosphérique ou encore la pression d'un autre circuit.

On connaît des détecteurs de pression comportant un corps délimitant deux chambres étanches l'une par rapport à l'autre et susceptibles d'être chacune reliée à une source de fluide sous pression. Dans le corps est monté coulissant un équipage mobile soumis de manière antagoniste à la pression régnant dans chacune des chambres. L'équipage mobile actionne, directement ou indirectement, un microcontacteur permettant de détecter au moins une position dudit équipage mobile, représentative d'un seuil de différence de pression entre les deux chambres, et d'émettre un signal en réponse à cette détection.

Le microcontacteur est la source d'un certain nombre de problèmes. En effet, la course de l'équipage mobile peut être très réduite (de l'ordre de quelques dixièmes de millimètre), rendant le montage et le réglage du microcontacteur très minutieux, et donc très onéreux. En outre, les efforts internes du microcontacteur, ainsi que les efforts entre le microcontacteur et l'équipage mobile, sont difficilement contrôlables et perturbent la précision de la détection de position, particulièrement dans le cas de la mesure de basses pressions. Le microcontacteur ainsi que l'équipage mobile sont par ailleurs susceptibles de s'user du fait des contacts et frottements lors de la manœuvre de ces éléments, ce qui limite la durée de fonctionnement normal d'un tel détecteur de pression. Enfin, la tenue en vibration d'un microcontacteur est limitée.

On connaît d'autres types de détecteur de pression dans lequel la détection de la position de l'équipage mobile est assuré par un aimant permanent porté par l'équipage mobile et par une cellule inductive sensible au champ magnétique de l'aimant permanent, portée de manière fixe par le corps en regard de l'aimant permanent. L'utilisation d'une cellule inductive évite tout contact mécanique entre l'équipage mobile et la cellule inductive, ce qui réduit notamment l'usure, le risque de déréglage mécanique et la perturbation de la détection due aux efforts de frottement.

Néanmoins, il est prévu sur ce type de détecteur de pression que l'équipage mobile utilise, pour se déplacer, une membrane souple soumise à l'action différentielle des pressions régnant dans les deux chambres, la membrane souple étant pincée entre un joint torique et un palier vissé dans le corps. Un tel détecteur de pression ne peut donc pas être utilisé pour détecter de manière fiable des différences de pression importante entre les deux chambres, les risques de déchirure de la membrane ou de défaut d'étanchéité au niveau du joint torique s'avérant élevés.

Les documents WO 2009/135612 A1, EP 1 319 936 A1 et WO 2005/059343 A1 divulguent des exemples de détecteur de pression.

### OBJET DE L'INVENTION

L'invention a donc pour but de proposer un détecteur de pression de type inductif, qui ne fait pas appel à une membrane souple pour détecter un différentiel de pression.

### RESUME DE L'INVENTION

A cet effet, on propose un détecteur de pression comprenant un corps délimitant une chambre dans laquelle débouche deux canaux susceptibles d'être chacun relié à une source de fluide sous pression, un équipage mobile s'étendant à l'intérieur de la chambre et fixé à une tige montée coulissante dans l'un des canaux en définissant avec celui-ci un passage de fuite pour le fluide, et un détecteur d'au moins une position de l'équipage mobile significative d'un seuil déterminé de différence de pression entre les deux sources de fluides.

L'équipage mobile est soumis à l'action d'un élément élastique rappelant ledit équipage mobile vers le canal dans lequel coulisse la tige.

Selon une caractéristique particulière de l'invention, la tige est équipée, à une extrémité opposée à celle recevant l'équipage mobile, d'une butée agencée pour limiter le coulissement de la tige vers la chambre.

De manière particulière la butée est équipée d'un joint d'étanchéité agencé pour obstruer le passage de fuite lorsque la butée est en contact avec le corps.

Selon une autre caractéristique particulière de l'invention, le détecteur de position émet un signal de type logique pouvant prendre deux valeurs distinctives en réponse à la détection de la position de l'équipage mobile.

Selon une autre caractéristique particulière de l'invention, le détecteur de position comporte un aimant permanent porté par l'équipage mobile et une cellule inductive sensible au champ magnétique de l'aimant permanent portée de manière fixe par le corps en regard de l'aimant permanent.

De manière particulière, le détecteur de position comprend en outre un contre-aimant monté fixe sur le corps en opposition de l'aimant permanent de l'équipage mobile par rapport à la cellule inductive.

Selon une autre caractéristique particulière de l'invention, l'élément élastique est un ressort hélicoïdal.

L'invention concerne aussi un système d'actionnement hydraulique comportant au moins un tel détecteur de pression.

L'invention concerne également un procédé de détection de franchissement d'un seuil de différence de pression mettant en œuvre un tel détecteur de pression.

### BREVE DESCRIPTION DES DESSINS

L'invention sera mieux comprise à la lumière de la description qui suit, laquelle est purement illustrative et non limitative, et doit être lue en regard des figures annexées parmi lesquelles :
[Fig.1A] la figure 1A est une vue d'un détecteur de pression selon un mode de réalisation particulier de l'invention ;
[Fig.1B] la figure 1B est une vue montrant le fonctionnement du détecteur de pression illustré à la figure 1A ;
[Fig.2A] la figure 2A est une vue d'une variante du détecteur de pression illustré à la figure 1A ;
[Fig.2B] la figure 2B est une vue montrant le fonctionnement du détecteur de pression illustré à la figure 2A ;
[Fig.3] la figure 3 est un graphe représentant le comportement de la cellule inductive équipant les détecteurs de pression illustrés aux figures 2A et 2B.

### DESCRIPTION DETAILLEE DE L'INVENTION

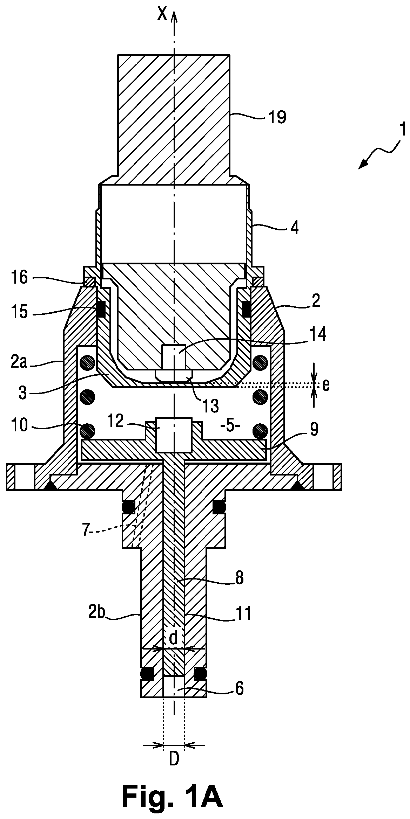

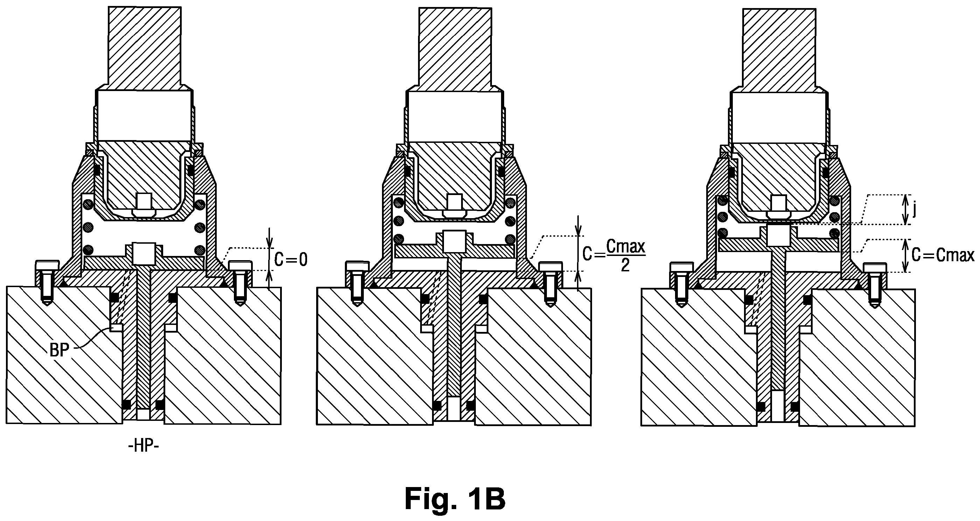

En référence à la figure 1, un détecteur de pression 1, selon un mode de réalisation particulier de l'invention, comprend un corps 2 creux sensiblement de révolution selon un axe X. Le corps 2 est ici constitué d'une pièce supérieure 2a de forme globalement tubulaire et d'une pièce inférieure 2b formant un fond du corps 2, la pièce supérieure 2a et la pièce inférieure 2b étant soudées entre elles. La pièce inférieure 2b est une pièce de révolution d'axe X ayant une surface extérieure étagée comportant : un premier tronçon d'extrémité, de plus grand diamètre, fixé à la pièce supérieure 2a pour fermer une extrémité de ladite pièce supérieure 2a ; un deuxième tronçon d'extrémité, de plus petit diamètre, destiné à être placé dans le circuit dont la pression est à mesurer ; et un tronçon intermédiaire, de diamètre intermédiaire entre les deux diamètres précédents, relié au premier tronçon d'extrémité par un premier épaulement et au deuxième tronçon d'extrémité par un deuxième épaulement. Le tronçon intermédiaire et le deuxième tronçon d'extrémité sont agencés pour être engagés dans un piquage étagé relié au circuit dont la pression est à mesurer, le premier tronçon d'extrémité formant une butée à l'enfoncement du tronçon intermédiaire et du deuxième tronçon d'extrémité dans le piquage. La pièce supérieure 2a porte un séparateur 3 vissé à l'intérieur du corps 2, ainsi qu'un couvercle 4. Le séparateur 3 et le couvercle 4 définissent un compartiment accueillant la partie électrique du détecteur de pression qui sera détaillé plus loin.

Le corps 2 délimite avec le séparateur 3 une chambre 5 de forme globalement cylindrique dans laquelle débouche un premier canal 6 et un deuxième canal 7 traversant de part en part la pièce inférieure 2b du corps 2.

Le premier canal 6 est de section circulaire de diamètre D. Il s'étend selon un axe confondu avec l'axe X et est destiné à être reliée à un circuit hydraulique (ou pneumatique) haute pression HP dans lequel est ici amené à circuler un fluide passant quasi instantanément d'une pression de repos à une pression de travail et vice-versa. La pression de repos et la pression de travail sont ici respectivement sensiblement égales à 10 bars et 200 bars. Sous un tel écart de pression, le critère de fuite en recette d'équipement, appelé aussi critère de fuite ATP, sur le circuit haute pression HP est généralement sensiblement égal 800cm³/min sur le circuit haute pression HP.

Le deuxième canal 7 s'étend selon un axe oblique par rapport à l'axe X et est destiné à être reliée à un circuit hydraulique (ou pneumatique) basse pression BP pour former un chemin de fuite. A cette fin, le deuxième canal 7 a une extrémité débouchant dans la chambre 5 et une extrémité opposée débouchant sur le deuxième épaulement de la surface externe de la pièce inférieure 2b. Le tronçon intermédiaire et le deuxième tronçon d'extrémité sont pourvus chacun d'au moins un joint torique pour assurer une étanchéité avec les parois du piquage dans lequel ils sont introduits de manière à assurer une étanchéité du circuit basse pression BP qui est disposé entre les deux joints (entre le deuxième épaulement et un épaulement du piquage s'étendant en regard dudit deuxième épaulement).

Dans le premier canal 6 est montée à coulissement, selon l'axe X, une tige 8 dont une extrémité supérieure est solidarisée à un équipage mobile 9, en forme de piston, s'étendant à l'intérieur de la chambre 5. L'équipage mobile 9 est fixe vis-à-vis de la tige 8 et est soumis à l'action d'un ressort 10 hélicoïdal prenant appui sur un épaulement interne de la pièce supérieure 2a du corps 2 et sur une face supérieure de l'équipage mobile 9. Le ressort 10 s'étend coaxialement à l'axe X et tend à plaquer l'équipage mobile 9 contre le fond du corps 2 qui forme une butée au déplacement de l'équipage mobile, et donc au coulissement de la tige 8.

Une extrémité inférieure de la tige 8 est destinée à être soumise à la pression du fluide régnant dans le circuit haute pression HP et définit avec le premier canal 6 un passage de fuite 11 pour le fluide. A cet effet, la tige est de forme cylindrique et a un diamètre d légèrement inférieur au diamètre D du premier canal 6. Le diamètre d de la tige 8 est ici sensiblement égal à 2,5 millimètres et le premier canal 6 présente avec la tige 8 un jeu diamétral sensiblement égal à 0,03 millimètre.

L'ensemble tige/équipage mobile 8, 9 est ainsi soumis de manière antagoniste à l'action du ressort 10 et celle de la pression régnant dans le circuit haute pression HP.

Le détecteur de pression 1 est équipé d'un détecteur de position inductif comprenant un aimant permanent 12 porté par l'équipage mobile 9, ainsi qu'une cellule inductive 13 de type à effet Hall et un contre-aimant 14 fixés tous deux sur le séparateur 3 en regard de l'aimant permanent 12. La cellule inductive 13 est reliée à une carte électronique (non représentée) qui est elle-même reliée à un connecteur électrique 19 s'étendant en saillie du couvercle 4.

La cellule inductive 13, le contre-aimant 14 et la carte électronique sont contenus dans le compartiment définis par le séparateur 3 et le couvercle 4, et sont donc physiquement séparés de la chambre 5. Le compartiment est rendu étanche vis-à-vis de la chambre 5 à l'aide d'un joint d'étanchéité 15 placé entre le séparateur 3 et le corps 2.

Le fonctionnement du détecteur de pression 1 va maintenant être détaillé.

Partant d'une course C nulle illustrée en première partie de la figure 1B, l'équipage mobile 9 ne commencent à se déplacer que si la pression du fluide régnant dans le circuit haute pression HP est assez importante pour vaincre un effort de seuil imposé par le ressort 10.

Lorsque le fluide circulant dans le circuit haute pression HP passe de l'état de repos à l'état de travail, l'équipage mobile 9 se déplace vers le séparateur 3 jusqu'à une position d'équilibre stable qui correspond à l'équilibre entre l'effort du ressort 10 et la pression exercée par le fluide du circuit haute pression HP sur l'extrémité inférieure de la tige 8. Dans le même temps, une partie du fluide du circuit haute pression HP passe à travers le passage de fuite 11 et arrive dans la chambre 5 en subissant une première résistance hydraulique, puis empreinte le deuxième canal 7 pour s'échapper de la chambre 5 en subissant une deuxième résistance hydraulique. Cet effet est essentiellement dû à l'étroitesse du passage de fuite 11 et du chemin de fuite formé par le deuxième canal 7.

On conçoit alors qu'à l'effort du ressort 10 associé à la pression de travail du fluide régnant dans le circuit haute pression, correspond une course maximale Cₘₐₓ de l'équipage mobile 9 et un jeu j minimal entre l'aimant permanent 12 et le séparateur 3 (figure 1B).

On remarquera que le jeu j minimal peut ici être défini par une cale de réglage 16 insérée entre un épaulement du séparateur 3 et une extrémité supérieure du corps 2.

On remarquera également que la chambre 5 peut être assujettie à une pression voisine de la pression de travail du fluide régnant dans le circuit haute pression HP, de sorte que le séparateur 3 doit être capable de supporter une telle pression. En particulier, l'épaisseur e de la paroi du séparateur 3, mise en évidence sur la figure 1A, devra être convenablement choisie afin d'éviter toute détérioration de la cellule inductive 13.

Lorsque la course C de l'équipage mobile 9 est maximale, seule une partie de la tige 8 est dans le premier canal 6. Le passage de fuite 11 a alors une longueur selon l'axe X ici sensiblement égale à 15 millimètres, ce qui, associé aux valeurs du diamètre d de la tige 8 et du jeu diamétral engendre un débit de fuite de l'ordre de 40 cm3/min équivalent à 5% du critère de fuite ATP du circuit haute pression HP.

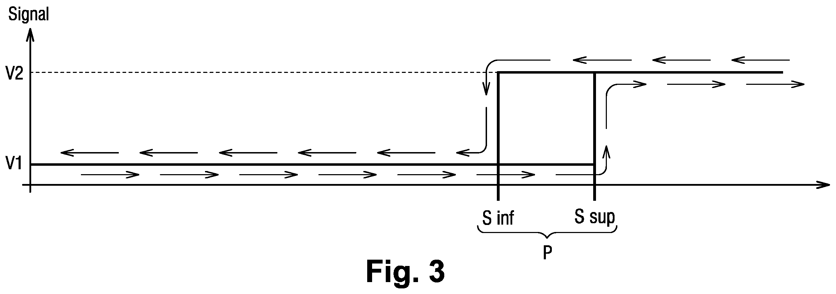

Le comportement de la cellule inductive 13 est quant à lui illustré sur le graphe de la figure 3, où en abscisse est portée l'intensité du champ magnétique influençant la cellule inductive 13, et en ordonnée la valeur du signal produit par la cellule inductive 13 en réponse au champ magnétique. Il s'agit d'une cellule inductive délivrant un signal pouvant prendre uniquement deux valeurs V1, V2 selon les modalités suivantes.

Si le champ magnétique influençant la cellule inductive 13 est faible, le signal produit par la cellule inductive 13 vaut V1. Lorsque le champ magnétique influençant la cellule inductive augmente et dépasse un seuil d'influence Sₛᵤₚ, le signal change brusquement de valeur pour prendre la valeur V2. Lorsque le champ magnétique décroît, et devient inférieur à un seuil d'influence S_{inf} inférieur au seuil d'influence Sₛᵤₚ, la valeur du signal revient à la valeur V1. Les seuils d'influence S_{inf} et Sₛᵤₚ définissent une plage de détection P, et sont susceptibles de se déplacer sous l'effet d'une variation de température.

Dans l'application illustrée ici, le champ magnétique influençant la cellule inductive 13 est celui de l'aimant permanent 12, tandis que les variations dudit champ magnétique sont dues au déplacement de l'équipage mobile 9 et donc de l'aimant permanent 12 sous l'effet de la pression du fluide régnant dans le circuit haute pression HP. On peut donc établir une correspondance entre une course déterminée C_{inf} de l'équipage mobile 9 et le seuil d'influence inférieur S_{inf}, ainsi qu'entre une course déterminée Cₛᵤₚ de l'équipage mobile 9 et le seuil d'influence supérieur S*ₛᵤₚ*. De façon équivalente, la plage de détection P désignera un intervalle de course entre la course déterminée C_{inf} et la course déterminée Cₛᵤₚ.

La cellule inductive 13 est disposée par rapport à l'équipage mobile 9, de manière à ce que la plage de détection P de la cellule inductive 13 corresponde à une course sensiblement égale à la moitié de la course maximale Cₘₐₓ de l'équipage mobile 9, qui elle-même correspond ici à une pression du fluide circulant du circuit haute pression HP sensiblement égale à 100 bars.

De façon connue en soi, la présence du contre-aimant 14 monté en opposition de courbe du champ magnétique resserre les lignes du champ magnétique de l'aimant permanent 12, ce qui a pour effet d'améliorer la précision du détecteur de position et de permettre l'utilisation d'une cellule inductive 13 bon marché.

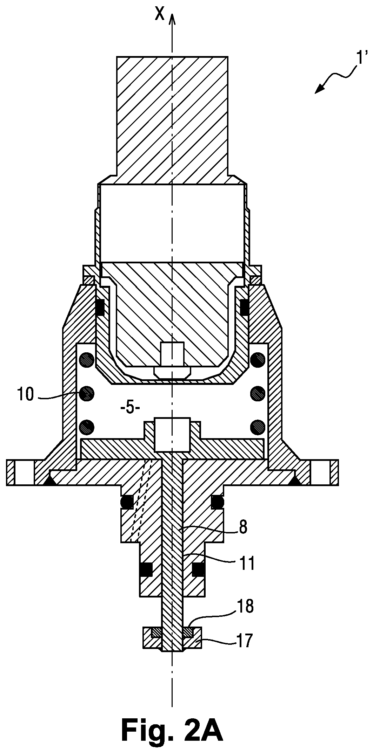

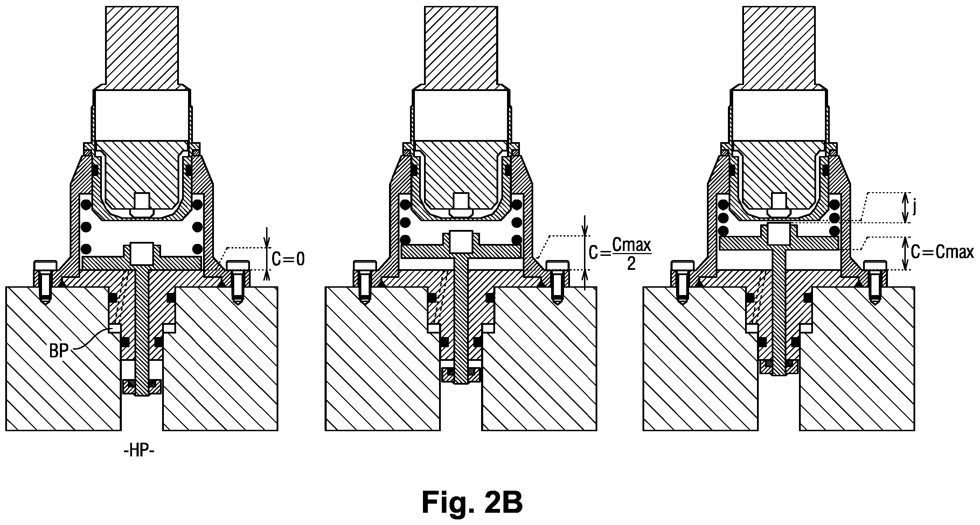

La figure 2A illustre un détecteur de pression 1' qui n'est autre qu'une variante du détecteur de pression 1 illustré à la figure 1A.

Le détecteur de pression 1' diffère du détecteur de pression 1 en ce que l'extrémité inférieure de la tige 8 est équipé d'une butée 17 agencée pour limiter le déplacement de ladite tige 8 vers la chambre 5, et donc la course C de l'équipage mobile 9.

La butée 17 comprend un joint d'étanchéité 18 logé dans une rainure annulaire de ladite butée 17 et destiné à être en contact avec une extrémité inférieure du corps 2 dans laquelle débouche le premier canal 6 lorsque la course C de l'équipage mobile est maximale, de manière à empêcher le fluide régnant dans le circuit haute pression HP d'emprunter le passage de fuite 11 et donc de limiter le débit de fuite dudit fluide.

On notera ainsi que le passage de fuite 11 du dispositif de pression 1' a une longueur selon l'axe X inférieure à celle du dispositif de pression 1 illustré à la figure 1A.

Bien entendu, l'invention n'est pas limitée au mode de réalisation décrit mais englobe toute variante entrant dans le champ de l'invention telle que définie par les revendications.

En particulier, le détecteur de pression peut avoir une structure différente de celle décrite en relation avec les figures.

Le ressort hélicoïdal 10 peut être remplacé par une membrane élastique.

Le nombre et le type de joints peuvent être différents de ceux indiqués.

L'utilisation d'un contre-aimant est facultative.

Bien que le capteur de détection sans contact soit ici de type inductif, il peut être de nature différente (optique...)

## Revendications

1. Détecteur de pression (1 ; 1') comprenant un corps (2) délimitant une chambre (5) dans laquelle débouche deux canaux (6, 7) agencés pour être chacun relié à une source de fluide sous pression (BP, HP), un équipage mobile (9) s'étendant à l'intérieur de la chambre et fixé à une tige (8) montée coulissante dans l'un (6) des canaux en définissant avec celui-ci un passage de fuite (11) pour le fluide, et un détecteur (12, 13) d'au moins une position de l'équipage mobile significative d'un seuil déterminé de différence de pression entre les deux sources de fluides, l'équipage mobile étant soumis à l'action d'un élément élastique (10) rappelant ledit équipage mobile vers le canal dans lequel coulisse la tige, **caractérisé en ce que** la tige (8) est équipée, à une extrémité opposée à celle recevant l'équipage mobile (9), d'une butée (17) agencée pour limiter le coulissement de la tige vers la chambre (5).

2. Détecteur de pression (1') selon la revendication 1, dans lequel la butée est équipée d'un joint d'étanchéité (18) agencé pour obstruer le passage de fuite (11) lorsque la butée est en contact avec le corps (2).

3. Détecteur de pression (1 ; 1') selon l'une quelconque des revendications précédentes, dans lequel, en réponse à la détection de la position de l'équipage mobile (9), le détecteur de position émet un signal de type logique pouvant prendre deux valeurs distinctives (V1, V2).

4. Détecteur de pression (1 ; 1') selon l'une quelconque des revendications précédentes, dans lequel le détecteur de position comporte un aimant permanent (12) porté par l'équipage mobile et une cellule inductive (13) sensible au champ magnétique de l'aimant permanent portée de manière fixe par le corps en regard de l'aimant permanent.

5. Détecteur de pression (1 ; 1') selon la revendication 4, dans lequel le détecteur de position comprend en outre un contre-aimant (14) monté fixe sur le corps (2) en opposition de l'aimant permanent (12) de l'équipage mobile (9) par rapport à la cellule inductive (13).

6. Détecteur de pression (1 ; 1') selon l'une quelconque des revendications précédentes, dans lequel l'élément élastique (10) est un ressort hélicoïdal.

7. Système d'actionnement hydraulique comportant au moins un détecteur de pression (1, 1') selon l'une quelconque des revendications précédentes.

8. Procédé de détection de franchissement d'un seuil de différence de pression mettant en œuvre un détecteur de pression (1, 1') selon l'une quelconque des revendications 1 à 6.

## Patentansprüche

1. Druckdetektor (1; 1') umfassend einen Körper (2), der eine Kammer (5) begrenzt, in die zwei Kanäle (6, 7) münden, die jeweils so angeordnet sind, dass sie mit einer unter Druck stehenden Flüssigkeitsquelle (BP, HP) verbunden sind, eine bewegliche Vorrichtung (9), die sich im Inneren der Kammer erstreckt und an einer Stange (8) befestigt ist, die in einem (6) der Kanäle verschiebbar angebracht ist und mit diesem einen Leckagedurchlass (11) für die Flüssigkeit bildet, sowie einen Detektor (12, 13) für mindestens eine Position der beweglichen Vorrichtung, die einen bestimmten Schwellenwert der Druckdifferenz zwischen den beiden Flüssigkeitsquellen anzeigt, wobei die bewegliche Vorrichtung der Wirkung eines elastischen Elements (10) ausgesetzt ist, das die bewegliche Vorrichtung in Richtung des Kanals rückführt, in dem die Stange gleitet, **dadurch gekennzeichnet, dass** die Stange (8) an einem Ende, das demjenigen gegenüberliegt, das die bewegliche Vorrichtung (9) aufnimmt, mit einem Anschlag (17) versehen ist, der so angeordnet ist, dass er das Gleiten der Stange in Richtung der Kammer (5) begrenzt.

2. Druckdetektor (1') nach Anspruch 1, wobei der Anschlag mit einer Dichtung (18) versehen ist, die so angeordnet ist, dass sie den Leckagedurchlass (11) verschließt, wenn der Anschlag mit dem Körper (2) in Kontakt steht.

3. Druckdetektor (1; 1') nach einem der vorstehenden Ansprüche, wobei der Positionsdetektor als Reaktion auf die Erfassung der Position der beweglichen Vorrichtung (9) ein logisches Signal aussendet, das zwei unterschiedliche Werte (V1, V2) annehmen kann.

4. Druckdetektor (1; 1') nach einem der vorstehenden Ansprüche, wobei der Positionsdetektor einen von der beweglichen Vorrichtung getragenen Permanentmagneten (12) und eine Induktionszelle (13) umfasst, die auf das Magnetfeld des Permanentmagneten reagiert und fest am Körper gegenüber dem Permanentmagneten angebracht ist.

5. Druckdetektor (1; 1') nach Anspruch 4, wobei der Positionsdetektor ferner einen Gegenmagneten (14) umfasst, der in Bezug auf die Induktionszelle (13) dem Permanentmagneten (12) der beweglichen Vorrichtung (9) gegenüberliegend fest am Körper (2) angebracht ist.

6. Druckdetektor (1; 1') nach einem der vorstehenden Ansprüche, wobei es sich bei dem elastischen Element (10) um eine Schraubenfeder handelt.

7. Hydraulisches Betätigungssystem mit mindestens einem Druckdetektor (1, 1') nach einem der vorstehenden Ansprüche.

8. Verfahren zum Erkennen des Überschreitens einer Druckdifferenzschwelle unter Verwendung eines Druckdetektors (1, 1') nach einem der Ansprüche 1 bis 6.

## Claims

1. Pressure detector (1; 1') comprising a body (2) delimiting a chamber (5), wherein two channels (6, 7) open into, arranged to each be connected to a source of pressurised fluid (BP, HP), a mobile unit (9) extending inside the chamber and fixed to a rod (8) mounted slidably in one (6) of the channels, by defining with it an escape passage (11) for the fluid, and a detector (12, 13) of at least one position of the mobile unit signifying a determined threshold of pressure difference between the two sources of fluids, the mobile unit being subjected to the action of an elastic element (10) returning said mobile unit towards the channel wherein the rod slides, **characterized in that** the rod (8) is equipped, at an end opposite that receiving the mobile unit (9), with an abutment (17) arranged to limit the sliding of the rod towards the chamber (5).

2. Pressure detector (1') according to claim 1, wherein the abutment is equipped with a seal (18) arranged to block the escape passage (11) when the abutment is in contact with the body (2).

3. Pressure detector (1; 1') according to any one of the preceding claims, wherein, in response to the detection of the position of the mobile unit (9), the position detector emits a signal of the logic type, being able to take two distinctive values (V1, V2).

4. Pressure detector (1; 1') according to any one of the preceding claims, wherein the position detector comprises a permanent magnet (12) carried by the mobile unit and an inductive cell (13) sensitive to the magnetic field of the permanent magnet fixedly carried by the body facing the permanent magnet.

5. Pressure detector (1; 1') according to claim 4, wherein the position detector further comprises a counter-magnet (14) fixedly mounted on the body (2) opposite the permanent magnet (12) of the mobile unit (9) with respect to the inductive cell (13).

6. Pressure detector (1; 1') according to any one of the preceding claims, wherein the elastic element (10) is a helical spring.

7. Hydraulic actuation system comprising at least one pressure detector (1, 1') according to any one of the preceding claims.

8. Method for detecting the crossing of a pressure different threshold implementing a pressure detector (1, 1') according to any one of claims 1 to 6.
